Europäisches Patentamt

**European Patent Office**

**Office européen des brevets**

(11) Numéro de publication: **0 060 203**
A2

## (12) DEMANDE DE BREVET EUROPEEN

(21) Numéro de dépôt: **82400426.1**

(22) Date de dépôt: **09.03.82**

(51) Int. Cl.³: **F 16 B 12/12**

(30) Priorité: **10.03.81 FR 8104746**

(43) Date de publication de la demande:
**15.09.82 Bulletin 82/37**

(84) Etats contractants désignés:
**BE CH DE FR GB IT LI NL SE**

(71) Demandeur: **Haeusler, Roland**
**14 rue Adrien Damalix**
**F-94410 St Maurice(FR)**

(72) Inventeur: **Haeusler, Roland**
**14 rue Adrien Damalix**
**F-94410 St Maurice(FR)**

(74) Mandataire: **Phélip, Bruno et al,**
**c/o Cabinet Harlé & Phélip 21, rue de La Rochefoucauld**
**F-75009 Paris(FR)**

(54) Nouveau système d'assemblage du genre à tenon et mortaise et articles mobiliers incorporant ledit système.

(57) Nouveau système d'assemblage du genre à tenon et mortaise et articles mobiliers incorporant ledit système. Il comprend essentiellement une mortaise ou fourreau (2) de forme parallélépipédique, réalisée dans un premier élément (1) à assembler, et deux tenons (4,7) réalisés respectivement sur deux autres éléments (3,6) à assembler, chaque tenon (4,7) ayant la forme d'un prisme avec une base constituée d'un trapéze rectangle, la pente des faces trapézoïdales (5,8) de chaque tenon étant égale et de même sens. Chaque tenon (4,7) est muni d'un perçage transversal (4b, 7a). La mortaise (2) comporte deux trous (2a, 2b) coïncidant respectivement avec les perçages (7a, 7b) des deux tenons (7,4) lorsque l'assemblage est terminé. Chaque élément supplémentaire (9, 10) à assembler présente deux orifices (9a, 9b; 10a, 10b). Des moyens (11, 12) assurent la liaison du système.

FIG.1

EP 0 060 203 A2

"Nouveau système d'assemblage du genre à tenon et
mortaise et articles mobiliers incorporant ledit
système"

L'invention concerne le domaine des systèmes d'-
assemblage du genre à tenon et mortaise. Elle est applicable le plus avantageusement pour assembler des éléments en bois, par exemple pour réaliser des articles
mobiliers de tout genre, notamment des étagères, des
armoires, etc.... Il va sans dire, cependant, que l'invention est utilisable avec des éléments constitués de
matières autres que le bois, en particulier des éléments métalliques ou en matière plastique.

Les systèmes d'assemblage du genre à tenon et mortaise sont bien connus de la technique. Ils ont été largement utilisés dans le domaine du bois, notamment. Il
importe, cependant, de trouver des améliorations à ce
système de base, en vue de réaliser des montages de précision ainsi que de permettre des agencements d'éléments
disposés dans divers plans. Il est par exemple souhaitable de réaliser des assemblages en trois dimensions.

L'invention a pour objet un tel système d'assemblage qui permet de monter des éléments avec beaucoup de
précision et de sécurité, même dans plusieurs plans orthogonaux entre eux.

Sous sa forme générale, l'invention concerne un système d'assemblage du genre à tenon et mortaise, caractérisé en ce qu'il comprend essentiellement une mortaise ou
fourreau, réalisée dans un premier élément à assembler et
comprenant au moins un logement et au moins une paire de
tenons, les deux tenons d'une paire étant prévus respectivement sur deux autres éléments à assembler, le nombre
de paires de tenons correspondant à celui desdits logements, chacun des tenons coopérant par conjugaison de
forme avec un logement, la disposition étant telle qu'à
l'assemblage les deux tenons d'une paire de tenons se disposent en vis-à-vis avec leur surface de contact à l'-intérieur du logement, le volume d'une paire de tenons assemblés étant sensiblement égal au volume intérieur du logement correspondant.

Pour les besoins pratiques, il est le plus souvent suffisant de prévoir une mortaise comprenant un ou deux logements.

La forme du ou des logements peut être quelconque : cylindrique ou prismatique. Ainsi la section du ou des logements peut être une courbe, avantageusement un cercle, ou un polygone ou une ligne mixte comprenant des arcs, de préférence circulaires et des segments de droite. Bien entendu la forme des tenons doit correspondre à celle du logement, dans lequel ils sont introduits en vue de l'assemblage.

Les deux tenons prévus respectivement sur les deux autres éléments à assembler s'insèrent dans un logement de la mortaise de manière que les faces extrêmes des deux tenons viennent en contact à l'intérieur du logement.

Si le logement est cylindrique, les tenons sont alors eux-mêmes cylindriques et les faces extrêmes des deux tenons viennent en butée l'une contre l'autre, leur surface de contact étant alors contenue dans un plan perpendiculaire à l'axe du logement ou oblique par rapport à celui-ci.

Selon une forme préférée de réalisation, le système d'assemblage selon l'invention comprend une mortaise à un logement, de forme parallélépipédique, réalisée dans un premier élément à assembler et deux tenons réalisés respectivement sur deux autres éléments à assembler, chaque tenon ayant la forme d'un prisme avec une base constituée d'un trapèze rectangle, la pente des faces trapézoïdales de chaque tenon étant égale et de même sens, l'assemblage étant tel que les deux tenons, dont le volume respectif est sensiblement égal à la moitié du volume utile de la mortaise, sont engagés dans celle-ci de part et d'autre de la mortaise, de manière que leurs faces trapézoïdales respectives viennent en application l'une contre l'autre.

Si, comme il est fréquent, on souhaite adjoindre à l'assemblage des éléments supplémentaires disposés dans un plan perpendiculaire au plan moyen de la mortaise, l'invention prévoit que chaque tenon est muni d'un perçage transversal, que la mortaise comporte deux trous coïncidant respectivement avec les perçages des deux tenons lorsque l'assemblage est terminé, que chaque élément supplémentaire à assembler présente deux orifices, un orifice étant situé dans l'alignement d'un trou de la mortaise et du perçage du tenon correspondant, en constituant ainsi un passage transversal, et que des moyens de liaison sont logés dans chacun desdits passages transversaux.

Dans une forme préférée de réalisation, les moyens de liaison comprennent une tige filetée coopérant avec un insert de filetage complémentaire disposé dans chaque perçage transversal d'un tenon.

En variante, dans le cas où l'utilisation d'un insert dans les tenons n'est pas nécessaire, les moyens de liaison peuvent consister simplement en une tige filetée traversant de part en part le passage transversal et comportant un boulon d'extrémité.

Selon la caractéristique essentielle de l'invention, les deux tenons d'une paire viennent s'imbriquer dans la mortaise sans qu'il y ait de jeu à l'assemblage, surtout lorsqu'ils ont une forme en trapèze rectangle. Les deux tenons sont engagés tête-bêche dans la mortaise, de part et d'autre de celle-ci. On obtient ainsi, de façon simple, un montage très sûr et un assemblage précis des é-

0060201

léments.

L'invention sera maintenant illustrée sans être aucunement limitée, par la description ci-après de certains exemples de réalisation, en référence aux dessins annexés sur lesquels :

Fig. 1 est une vue éclatée en perspective montrant le système avant assemblage.

Fig. 2 est une vue correspondant à la figure 1, montrant les éléments assemblés.

Fig. 3 est une vue en perspective éclatée, montrant une application du système d'assemblage selon les figures 1 et 2 pour la réalisation d'articles mobiliers.

Fig. 4 est une vue correspondant à la figure 3, montrant les éléments du système assemblés.

Fig. 5 est une vue en perspective éclatée d'une variante du système d'assemblage.

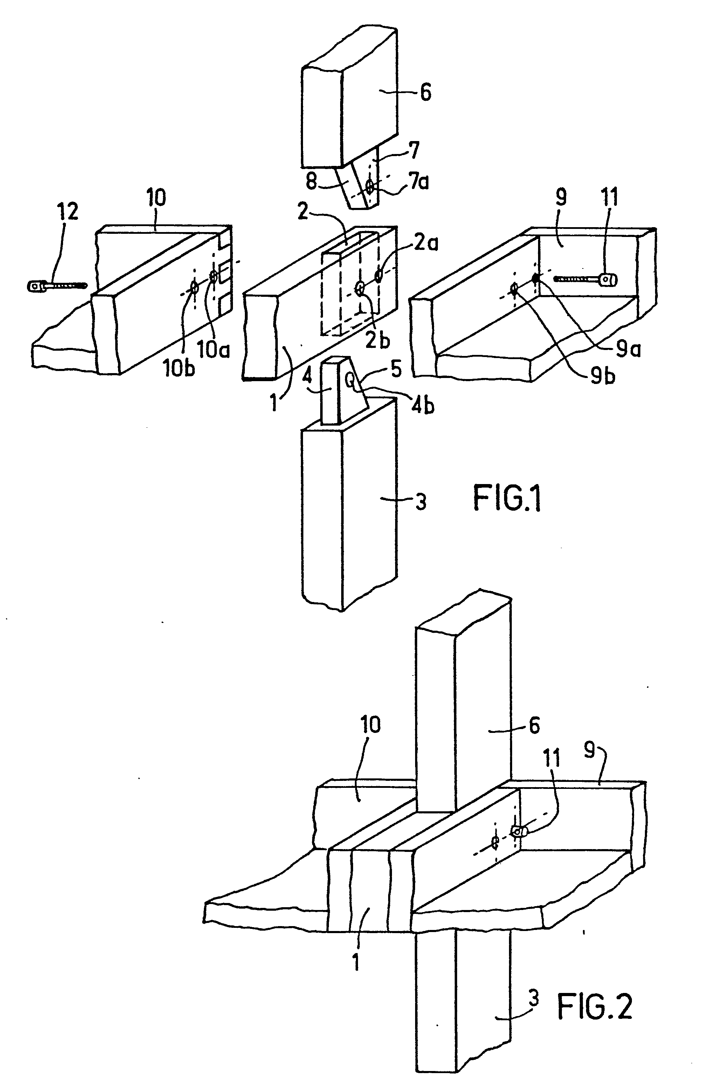

Dans la forme de réalisation représentée aux figures 1 et 2, les éléments à assembler sont désignés par les références 1, 3, 6, 9 et 10. Dans l'exemple choisi, il s'agit d'éléments en bois. L'élément 1 comporte une mortaise 2 de forme parallélépipédique (dans cet exemple particulier la section est rectangulaire). Au niveau de la mortaise 2, sont pratiqués deux trous transversaux 2a, 2b traversant de part en part l'élément 1.

L'élément 3 et l'élément 6 comportent respectivement deux tenons 4 et 7. Le volume de chacun de ces tenons est sensiblement égal à la moitié du volume utile de la mortaise 2. La forme des tenons 4 et 7 constitue une caractéristique avantageuse de l'invention. Comme le représente le dessin, les tenons ont une forme prismatique avec une base constituée d'un trapèze rectangle. Les faces trapézoïdales 5 et 8 présentent des pentes égales et de même sens. Par ailleurs, le tenon 4 comporte un perçage 4b qui, dans l'exemple choisi, est établi pour comporter un insert métallique fileté. De même le tenon 7 comporte un perçage 7a muni d'un insert taraudé.

Le montage des éléments 3 et 6 sur l'élément 1 s'effectue, conformément à l'invention, en engageant dans la mortaise 2 les tenons respectifs 4 et 7 des éléments 3 et 6. La disposition est telle que les faces trapézoïdales 5 et 8 viennent s'appliquer l'une contre l'autre, en se logeant dans le volume utile de la mortaise 2. Au cours de l'assemblage, également, les trous 2a et 2b de la mortaise viennent exactement en regard des perçages 7a et 4b des éléments 3 et 6.

Dans l'exemple représenté à la figure 1, on a illustré le montage non seulement des éléments 3 et 6 sur l'élément 1, mais aussi des éléments 9 et 10 qui sont disposés dans un plan perpendiculaire au plan moyen de l'élément 1. L'élément 9 comporte deux orifices, 9a et 9b, tandis que l'élément 10 comporte deux orifices correspondants 10a et 10b. On a représenté d'une manière schématique, par des tiges filetées 11 et 12, les moyens de liaison qui sont nécessaires à l'assemblage.Comme on le voit, la tige 11 traverse l'orifice 9a de l'élément 9 et le trou 2a de la mortaise 2, avant de coopérer par vissage avec l'insert logé dans le perçage 7a du tenon 7 de l'élément 6. De même, la tige filetée 12 passe à travers l'orifice 10b et le trou 2b pour se visser dans l'insert logé dans le perçage 4b.

La figure 2 est une vue en perspective qui montre les éléments 1, 3, 6, 9 et 10 en position d'assemblage.

Dans l'exemple décrit ci-dessus, on a choisi le cas d'une liaison par insert logé dans les tenons, et capable de recevoir l'extrémité d'une tige filetée. Il va sans dire que l'invention couvre également la variante selon laquelle le moyen de liaison consisterait en une tige filetée traversant de part en part un orifice d'un élément 9 ou 10, le trou de la mortaise et le perçage correspondant du tenon, pour recevoir un boulon d'extrémité. La forme de réalisation avec un insert dans le tenon, est préférée lorsqu'il s'agit d'éléments en bois à assembler avec précision.

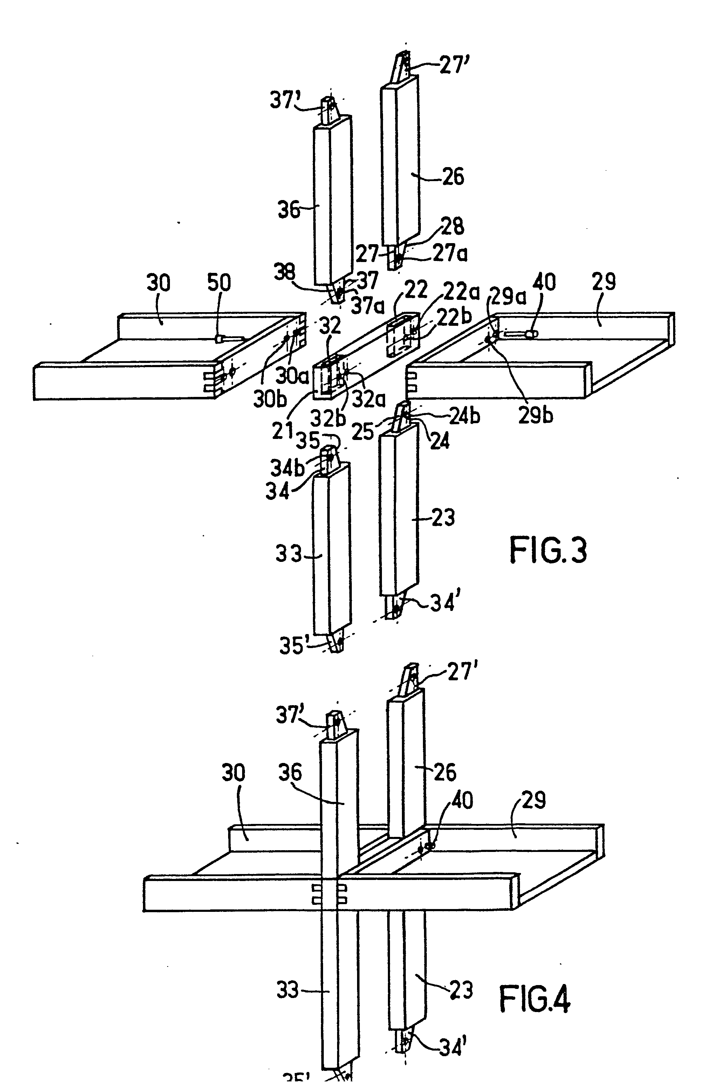

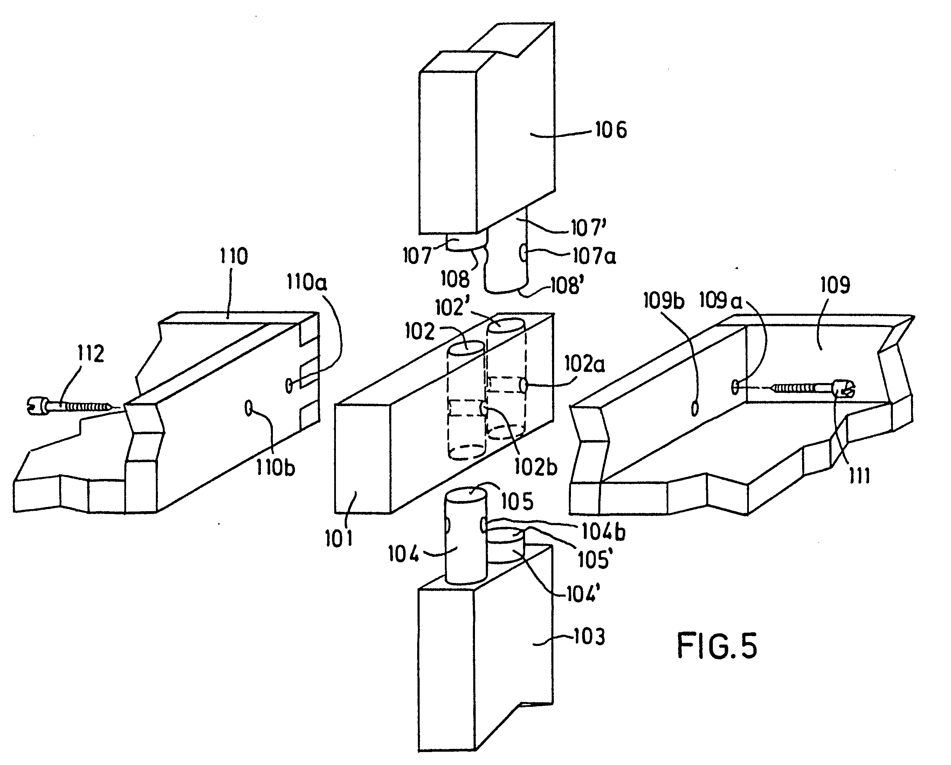

Les figures 3 et 4 illustrent l'application du système d'assemblage selon l'invention, en vue de la réalisation d'articles mobiliers, par exemple des étagères.

Comme le représente la figure 3, un élément 21 est assemblé d'une part avec deux paires d'éléments 23, 33, et 26, 36, et, d'autre part, avec deux éléments 29 et 30 en forme de tablettes.

L'élément 21 comporte deux mortaises 22, 32 munies de trous respectifs 22a, 22b et 32a, 32b. A la partie inférieure de la figure 3, on voit les éléments 23 et 33 comportant chacun un tenon, réalisé de la manière décrite et illustrée précédemment en référence aux figures 1 et 2. Ainsi, l'élément 23 comporte un tenon trapézoïdal 24, destiné à se loger dans la mortaise 22. De même, l'élément 33 comporte un tenon trapézoïdal 34, destiné à se loger dans la mortaise 32. Les tenons 24 et 34 sont munis respectivement d'inserts taraudés 24b et 34b. Comme le montre la figure 3, les éléments 23 et 33 comportent à l'autre extrémité, des tenons 34', 35', avantageusement identiques aux tenons 24 et 34.

La configuration des éléments 26 et 36 est semblable à celle des éléments 23 et 33. Ils comportent à une extrémité des tenons 27, 37, comportant des inserts respectifs 27a, 37a. A leur autre extrémité, ils présentent des tenons 27', 37'. Lors de l'assemblage, les surfaces trapézoïdales 25 du tenon 24 et 28 du tenon 27, viennent en vis-à-vis, s'appliquer l'une contre l'autre à l'intérieur de la mortaise 22. Il en est de même pour les surfaces trapézoïdales 35 du tenon 34 et 38 du tenon 37, qui viennent s'appliquer à l'intérieur de la
mortaise 32. Dans cet assemblage, l'insert 24b vient
exactement en alignement du trou 22a, l'insert 27a vient
en alignement avec le trou 22b, l'insert 37a s'aligne
avec le trou 32a et l'insert 34b s'aligne avec le trou
32b.

Dans un plan perpendiculaire à celui qui contient l'élément 21 et les deux paires d'éléments 23,
33 et 26,36, il est prévu selon l'invention, d'assembler deux éléments 29, 30 réalisés sous forme de tablettes dans l'exemple représenté. Chacun de ces éléments 29, 30 présente deux paires d'orifices. On illustrera maintenant la disposition et la fonction d'une
paire de ces orifices, les autres étant identiques.
L'élément 29 comporte par exemple des orifices 29a,
29b, destinés à constituer un passage transversal avec
les trous 22a, 22b de la mortaise 22. En vis-à-vis,
les orifices 30a, 30b, de l'élément 30, se placent en
correspondance et en alignement . Dans l'exemple choisi, les moyens de liaison sont des tiges filetées 40
et 50 qui viennent respectivement se loger dans les
inserts prévus dans les tenons correspondants.

Une fois l'assemblage réalisé, les éléments
prennent la disposition représentée à la figure 4.

Pour faciliter la vue en perspective, les dessins des figures 1 et 2 ont été représentés en rendant
apparente la face des éléments 9, 10, qui est normalement cachée au montage. Il en est de même pour les éléments 29 et 30 des figures 3 et 4. On notera en effet
que lors de la réalisation d'un article de mobilier,
les moyens de liaison sont de préférence cachés par
les éléments correspondants, tels que les éléments
9, 10, et 29,30.

La figure 5 illustre en perspective éclatée, de la même manière que la figure 1, une variante de réalisation du système d'assemblage selon l'invention. Dans ce cas la mortaise prévue dans l'élément 101 comprend deux logements 102, 102'. Dans l'exemple choisi et illustré, ces logements sont cylindriques et leur section est circulaire. Il va sans dire que toute autre forme ou section conviendrait également. Chaque logement 102, 102' est muni de trous transversaux 102b, 102a, traversant de part en part l'élément 101.

L'élément 103 comporte des tenons 104 et 104' de forme cylindrique correspondant à celle des logements 102 et 102'. Le tenon 104 comporte un perçage 104b qui peut recevoir un insert métallique fileté. Les faces extrêmes des tenons 104 et 104' sont désignées par 105 et 105', respectivement.

Semblablement, l'élément 106 comporte des tenons 107 et 107' de forme cylindrique, correspondant à celle des logements 102 et 102'. Le tenon 107' comporte un perçage 107a qui peut recevoir un insert métallique fileté. Les faces extrêmes des tenons 107 et 107' sont désignées par 108 et 108' respectivement.

Au montage, les tenons 104 et 107 s'engagent dans le logement 102 et leurs faces 105 et 108 viennent en contact à l'intérieur du logement 102. Le volume total des tenons 104 et 107 correspond sensiblement au volume intérieur du logement 102. Une fois l'assemblage terminé, le perçage 104b du tenon 104 vient à l'alignement du trou 102b. De même, les tenons 104' et 107' s'engagent dans le logement 102' et leurs faces 105' et 108' viennent en contact à l'intérieur du logement 102'. Le volume total des tenons 104' et 107' correspond sensiblement au volume intérieur du logement 102'. Pour un assemblage précis, on a adopté sur l'élément 103 une disposition de tenons symétrique et complémentaire de celle de l'élément 106. Ainsi les paires de tenons 104, 107 et 104', 107' sont réalisées comme représenté au dessin de la figure 5, mais on notera que toute autre disposition pourrait être adoptée, dès lors que le volume total des paires de tenons correspond sensiblement à celui du logement considéré. Une fois l'assemblage terminé, le perçage 107a du tenon 107' vient en alignement avec le trou 102a.

On a également représenté à la figure 5 deux éléments 109 et 110 pour illustrer un montage dans deux plans orthogonaux.

L'élément 109 comporte deux orifices 109a et 109b tandis que l'élément 110 comporte deux orifices 110a et 110b. On voit des tiges filetées 111 et 112 qui sont représentatives des moyens de liaison nécessaires à l'assemblage.

La tige 111 traverse l'orifice 109a de l'élément 109 et le trou 102a du logement 102', avant de coopérer par vissage avec l'insert logé dans le perçage 107a du tenon 107' de l'élément 106. De même, la tige filetée112 passe à travers l'orifice 110b et le trou 102b pour se visser dans l'insert logé dans le perçage 104b du tenon 104 de l'élément 103.

En l'absence d'inserts métalliques dans les perçages 107a et 104b, il suffirait bien entendu de prévoir un montage avec tige filetée et boulon d'extrémité, ainsi qu'on l'a indiqué précédemment pour le mode de réalisation représenté à la figure 1.

L'homme de l'art apercevra que l'invention offre un système d'assemblage général, qui permet la réalisation d'articles de mobilier les plus divers. Il est naturellement avantageux que la conception soit modulaire, c'est-à-dire que le constructeur dispose d'éléments de dimensions déterminées à l'avance.

Dans l'exemple de réalisation représenté aux figures 3 et 4, on voit aussi que les tenons 34', 35' des éléments 23 et 33, ainsi que les tenons 27' et 37' des éléments 26 et 36, permettent le montage, conformément à l'invention, d'une série d'autres éléments analogues. Les possibilités d'assemblage sont donc très variées.

On a dit précédemment que l'invention offrait le plus d'avantages pour la réalisation d'assemblages d'éléments en bois. Jusqu'à présent, les assemblages par tenons et mortaise d'éléments en bois, n'offraient pas une précision suffisante. L'invention, au contraire, procure un moyen de réaliser des montages précis et sûrs.

Il va sans dire cependant, que les moyens de l'invention peuvent être mis en oeuvre avec des matériaux autres que le bois, par exemple des éléments réalisés en matière plastique ou en métal.

## REVENDICATIONS

1. Système d'assemblage du genre à tenon et mortaise caractérisé en ce qu'il comprend essentiellement une mortaise ou fourreau (2, 102, 102') réalisée dans un premier élément (1, 101) à assembler et comprenant au moins un logement (2, 102, 102') et au moins une paire de tenons (4,7; 104, 107; 104', 107'), les deux tenons d'une paire étant prévus respectivement sur deux autres éléments (3,6; 103, 106) à assembler, le nombre de paires de tenons correspondant à celui desdits logements, chacun des tenons coopérant par conjugaison de forme avec un logement, la disposition étant telle qu'à l'assemblage les deux tenons d'une paire de tenons se disposent en vis-à-vis avec leur surface de contact (5,8; 105, 108; 105', 108') à l'intérieur du logement, le volume d'une paire de tenons assemblés étant sensiblement égal au volume intérieur du logement correspondant.

2. Système d'assemblage selon la revendication 1, caractérisé en ce que la mortaise comprend un (2) ou deux (102,102') logements.

3. Système d'assemblage selon l'une des revendications 1 ou 2, caractérisé en ce que la forme du ou des logements est cylindrique ou prismatique.

4. Système d'assemblage selon l'une quelconque des revendications 1 à 3, caractérisé en ce que la section du ou des logements est une courbe, avantageusement un cercle, ou un polygone ou une ligne mixte comprenant des arcs, de préférence circulaires et des segments de droite.

5. Système d'assemblage selon l'une quelconque des revendications 1 à 4, caractérisé en ce que le logement (102, 102') est cylindrique, les tenons (104, 107; 104', 107') sont alors eux-mêmes cylindriques et les faces extrèmes (105, 108; 105', 108') des deux tenons viennent en butée l'une contre l'autre, leur surface de contact étant alors contenue dans un plan perpendiculaire à l'axe du logement ou oblique par rapport à celui-ci.

6. Système d'assemblage selon l'une quelconque des revendications 1 à 4, caractérisé en ce qu'il comprend essentiellement une mortaise ou fourreau (2), de forme parallélépipédique, réalisée dans un premier élément (1) à assembler, et deux tenons (4,7) réalisés respectivement sur deux autres éléments (3,6) à assembler, chaque tenon (4,7) ayant la forme d'un prisme avec une base constituée d'un trapèze rectangle, la pente des faces trapézoïdales (5,8) de chaque tenon étant égale et de même sens, l'assemblage étant tel que les deux tenons (4,7) dont le volume respectif est égal à la moitié du volume utile de la mortaise (2), sont engagés de part et d'autre de celle-ci, de manière que leurs faces trapézoïdales (5,8) viennent en application l'une contre l'autre.

7. Système d'assemblage selon l'une quelconque des revendications 1 à 6, comprenant des éléments supplémentaires disposés dans un plan perpendiculaire au plan moyen de la mortaise, ledit système étant caractérisé en ce que chaque tenon (4,7; 104, 107; 104', 107') est muni d'un perçage transversal (4b, 7a, 104b, 107a) en ce que la mortaise (2; 102, 102') comporte deux trous (2a, 2b; 102a, 102b) coïncidant respectivement avec les perçages (7a, 4b; 104b, 107a) des tenons lorsque l'assemblage est terminé, en ce que chaque élément supplémentaire (9, 10; 109, 110) à assembler présente deux orifices (9a, 9b; 10a, 10b; 109a, 109b; 110a, 110b) un orifice étant situé dans l'alignement du trou de la mortaise (2, 102, 102') et du perçage du tenon correspondant, en constituant ainsi un perçage transversal, et en ce que des moyens de liaison (11, 12; 111,112) sont logés dans chacun desdits passages transversaux.

8. Système selon l'une quelconque des revendications 1 à 7, caractérisé en ce que les moyens de liaison (11, 12; 111,112) comprennent une tige filetée coopérant avec un insert de filetage complémentaire, disposé dans chaque passage transversal (4b, 7a; 104b, 107a) d'un tenon (4,7; 104,107; 104', 107').

9. Système selon l'une quelconque des revendications 1 à 8, caractérisé en ce que les moyens de liaison (11, 12; 111, 112) consistent en une tige filetée traversant de part en part le passage transversal, et comportant un boulon d'extrémité.

10. Système selon l'une quelconque des revendications 1 à 9, caractérisé en ce que les éléments à assembler sont en bois.

11. Articles et éléments de mobilier mettant en oeuvre le système d'assemblage selon l'une quelconque des revendications 1 à 10.

FIG.1

FIG.2

FIG.3

FIG.4

FIG.5